# EUROPEAN PATENT SPECIFICATION

(11) **EP 1 528 068 B1**
(45) Date of publication and mention of the grant of the patent: **07.04.2010**
(21) Application number: 03766758.1
(22) Date of filing: 05.08.2003
(51) Int. Cl.: C07K 14/415, A23J 3/16, A23J 1/14, A23L 1/20, C07K 1/14, C07K 1/30

(54) **PROCESS FOR PRODUCING SOY PROTEIN**
VERFAHREN ZUR HERSTELLUNG VON SOJA PROTEIN
PROCEDE DE PRODUCTION DE PROTEINE DE SOJA

(30) Priority: 05.08.2002 JP 2002226975
(43) Date of publication of application: 04.05.2005
(73) Proprietor: Fuji Oil Co., Ltd., Osaka-shi, Osaka 542-0086 (JP)
(72) Inventor: LIU, Xinqi c/o FUJI OIL CO., LTD., Tsukuba-gun, Ibaraki 300-2436 (JP); TSUMURA, Kazunobu c/o FUJI OIL CO., LTD., Tsukuba-gun, Ibaraki 300-2436 (JP); KUGIMIYA, Wataru c/o FUJI OIL CO., LTD., Tsukuba-gun, Ibaraki 300-2436 (JP); SATO, Ryotaro c/o FUJI OIL CO., LTD., Tsukuba-gun, Ibaraki 300-2436 (JP); SAITO, Yutaka c/o FUJI OIL CO., LTD., Tsukuba-gun, Ibaraki 300-2436 (JP); SAMOTO, Masahiko c/o FUJI OIL CO., LTD., Tsukuba-gun, Ibaraki 300-2436 (JP)
(74) Representative: Bradley, Josephine Mary
(86) International application number: PCT/JP2003/009954
(87) International publication number: WO 2004/013170

(56) References cited:
- EP-A1- 0 943 245
- EP-A2- 0 827 698
- WO-A-97/12524
- WO-A-99/17619
- WO-A-02/100186
- AU-A- 9 049 098
- JP-A- 4 173 057
- JP-A- 5 304 896
- JP-B1- 44 006 211
- US-A- 2 007 962
- US-A1- 2002 098 276

## Description

### Technical Field

The present invention relates to a tasty soy protein having excellent heat gelation properties, and a method for producing the same, particularly to a method for producing isolated-soy protein prepared without performing isoelectric point precipitation step (acid-precipitation treatment) of soy protein.

### Background Art

As soy protein, defatted soybeans obtained by removing fats and oils from soybeans, concentrated-soy protein obtained by removing whey components from defatted soybeans, isolated-soy protein obtained by removing whey components and bean-curd refuse components from defatted soybeans, and the like, are sold. The isolated-soy protein is generally produced by water-extracting defatted soy beans in a neutral to weak-alkaline region; adjusting the extract solution (defattedsoybeanmilk) obtained by removing bean-curd refuse components being a water-insoluble components, to a degree of acidity near the isoelectric point of globulin which is the main protein of the soybean to form a precipitate; separating the precipitate from soluble whey components in an acidic region; dissolving and neutralizing the precipitate; and sterilizing and drying the resultant. In this production method comprising an acid-precipitation step, protein extracted as an aqueous solution is temporarily insolubilized (precipitated), dissolved again to obtain an aqueous solution, and sterilized and dried to obtain an isolated-soy protein product see for example US-A-2 007 962.

As production methods for producing isolated-soy protein other than the above one, Japanese Patent Publication No. 36-14270 describes a method for producing soy powder wherein the tissues of soybeans are softened by immersing raw soybeans or defatted soybeans in a buffer solution at pH 3.0 to 5.0; sugars, pigments and the like in the soybeans are eluted and removed; the soybeans are dissolved using an alkali; pH is adjusted to 4.5 to 5.0 by adding an acid; the resultant precipitation is dissolved with an alkali; pH is adjusted to 5.0 to 7.5; the resultant is stirred after adding a colloid stabilizer, and dried at a low temperature. Moreover, Japanese Patent Publication No. 44-6211 describes a method wherein soy powder is added to acidic water to make a slurry, whey components are separated and removed, then the slurry is suspended in water, the suspensions are adjusted to have a pH of 6 to 8 so that soy protein is solubilized to be separated from bean-curd refuse components, the protein extract solution is acidified to precipitate the protein, and the precipitated protein is separated and concentrated.

As described above, any of the conventional methods for producing isolated-soy protein includes a so-called acid-precipitation step in which soy protein is precipitated under acidic conditions. Though this acid-precipitation step is a simple step to separate whey components and concentrate proteins, it is a step of temporarily insolubilizing protein dissolved in water and extracted, then dissolving the protein again to forming it into powder. Thus, according to the knowledge of the present inventors, the resultant soy proteins having underdone the acid-precipitation step, showed undesirable aspects qualitatively, for example astringency characteristic to acid-precipitation treatment. In addition, in normal-water extraction of soy protein, the concentration of the soy protein in the extract solution is at most about 5%, and drying the extract solution without isolation and concentration by the acid-precipitation step should be avoided in terms of energy consumption.

In addition, Japanese Laid-Open Patent Application No. 7-238089 discloses a method wherein defatted soybeans are extracted with an aqueous extracting agent at a pH higher than the isoelectric point, e.g. pH 9.4, soy protein is precipitated by the acid-precipitation treatment adjusting the protein extract solution to have a pH near the isoelectric point, and thus isolated-soy protein having a high content of isoflavone is obtained without washing the precipitate. However, the soy protein thus obtained has bitterness characteristic of soybeans because the precipitate is not washed, and its taste is not desirable. Furthermore, in this publication, it is proposed to carry out water extraction of defatted soybeans by a two-stage counter-current extraction method, but it can be considered that this method is intended for collecting isoflavone in high yield.

On the other hand, as examples of extraction of foods using the counter-current extraction method, Japanese Laid-Open Patent Application No. 5-207900 discloses a method wherein fructooligosaccharide is extracted from yacon efficiently with little hydrolysis by using a multi-stage counter-current extraction method under controlled pH and temperature. Moreover, Japanese Laid-Open Patent Application No. 10-66507 discloses a method wherein soluble coffee is efficiently extracted by using heat hydrolysis in conjunction with counter-current extraction for ground of coffee. In these methods, however, the counter-current extraction is used for fructooligosaccharide or soluble coffee, and not for a method for producing isolated-soy protein wherein soy protein is generally separated and concentrated by an acid-precipitation step. Therefore, tastes and heat gelation properties of the soy protein extracted without acid-precipitation treatment were not known.

### Disclosure of the Invention

The object of the present invention is to provide a method for obtaining efficiently a tasty isolated-soy protein having excellent heat gelation properties, showing no bitterness or astringency characteristic of conventional soy protein; and particularly to provide a method for obtaining more efficiently a tasty isolated-soy protein showing no bitterness or astringency characteristic of soy protein, without carrying out acid-precipitation treatment that has been considered as efficient isolation and concentration means in the production step of the isolated- soy protein so far, while reducing the amount of water used in a soy protein manufacturing plant and thus lessening burden on the environment owing to the reduction of discharged water.

The present inventors have made a keen study to solve the above-mentioned problems. They separated protein and water by removing whey components by washing defatted soybeans with acidic water, then carrying out protein extraction in which protein is solubilized in a neutral to alkaline region and thus separated from bean-curd refuse components, and by maintaining the neutral to alkaline region. Thus, they found out that soy protein having excellent heat gelation properties and being very tasty compared to the conventional soy protein by acid-precipitation treatment could be obtained. The present invention has been thus completed. Further, it was found that carrying out a counter-current extraction while extracting whey components or proteins with an aqueous medium was an excellent method which reduces the amount of water used in a soy protein manufacturing plant and thus lessens burden on the environment owing to the reduction of discharged water.

That is, the present invention relates to a method for producing an isolated-soy protein without acid-precipitation step, comprising the following steps: an acid-washing step of washing defatted soybeans having an NSI (nitrogen solubility index) of 60 or more with an aqueous medium in a region of pH 3.0 to 5.0 to extract and remove whey components; an extraction step of extracting protein from acid-washed soybean slurry obtained in the acid-washing step with an aqueous medium in a neutral to alkaline region by a counter-current extraction method and then removing extraction residue to obtain a soy protein extract solution with 8 to 18% by weight of a solid content; and to provide the extract solution obtained in the extraction step directly for a drying step ("1").

The present invention also relates to: the method for producing an isolated-soy protein according to "1", wherein the extract solution obtained in the extraction step is provided directly for a sterilization and drying step ("2"); the method for producing an isolated-soy protein according to "1" or "2", wherein the counter-current extraction method is a three-stage counter-current extraction method ("3"); The method for producing an isolated-soy protein according to "1", "2" or "3", wherein the counter-current extraction method is a pH gradient counter-current extraction method ("4"); the method for producing an isolated-soy protein according to any of "1" to "4", wherein the protein is extracted with an aqueous medium in an amount equal to or less than seven times the amount of soybean raw material in terms of raw material defatted soybeans, in the extraction step ("5"); the method for producing an isolated-soy protein according to any of "1" to "5", wherein the extraction is carried out at an extraction temperature of 40 to 65°C, in the extraction step ("6"); the method for producing an isolated-soy protein according to any of "1" to "6" , wherein the extraction is carried out so that the soy protein content in the extract solution is 10% by weight or more, in the extraction step ("7"); the method for producing an isolated-soy protein according to any of "1" to "7" , wherein the neutral to alkaline region is a region of pH 6.5 to 8.5 ("8") ; the method for producing an isolated-soy protein according to any of "1" to "8", wherein the defatted soybeans are washed by a multistage washing method of two or three stages, in the acid-washing step ("9"); the method for producing an isolated-soy protein according to any of "1" to "9", wherein the defatted soybeans are washed so that the crude protein content in the acid-washed soybean slurry solid material is 65% by weight or more, preferably 70% by weight or more, in the acid-washing step ("10"); the method for producing an isolated-soy protein according to any of "1" to "10", wherein the defatted soybeans are washed with an aqueous medium containing an emulsifier, in the acid-washing step ("11") ; the method for producing a food or food material comprising the method for producing an isolated-soy protein according to any of "1" to "11" ("12").

### Brief Description of Drawings

Figure 1 is a conceptual view showing a three-stage counter-current extraction system wherein only aqueous medium (extract solution) is moved to contact the soybean raw material (extraction residue) sequentially, without moving extraction residue containing mainly soybean raw material and bean-curd refuse.
Figure 2 is a schematic diagram showing the production of isolated-soy protein by a pH gradient three-stage counter-current extraction using acid-washed soybean slurry as a soybean raw material.

### Best Mode of Carrying Out the Invention

The method for producing an isolated-soy protein of the present invention is not specifically limited as long as it is a method for producing an isolated-soy protein without acid-precipitation step comprising: an acid-washing step of washing defatted soybeans with an aqueous medium in a region of pH 3.0 to 5.0 to extract and remove whey components; an extraction step of extracting protein from acid-washed soybean slurry obtained in the acid-washing step with an aqueous medium in a neutral to alkaline region by a counter-current extraction method and then removing an extraction residue; to obtain a soy protein extract solution with 8 to 18% by weight of a solid content; and to provide the extract solution obtained in the extraction step directly for a drying step.

Acid-precipitation step herein used relates to a step of carrying out isoelectric point precipitation treatment (acid-precipitation treatment) of soy protein having an isoelectric point in the acidic region. Slurry herein used relates to a water-containing material treated by an aqueous medium, and includes those in a fluid form, semi-fluid form, semi-solid form and also materials obtained by temporarily drying the slurry and adding again an aqueous medium thereto. The counter-current extraction method relates to a multistage extraction method wherein the soybean raw material and the aqueous medium are relatively moved mutually in the opposite directions to contact them each other. Therefore, the counter-current extraction method also includes a multistage extraction method wherein only aqueous medium is moved to contact the soybean rawmaterial sequentially, without moving the soybean raw material. A preferred embodiment of the counter-current extraction method includes a counter-current method in which extraction is carried out while a difference in concentration between the extract solution and the extracted material is kept constant. For example, a counter-current extraction method in which a fresh soybean raw material having the highest protein concentration is made to contact an extract solution having the highest solid concentration, which have been already used in the extraction treatment, and a newly introduced aqueous medium is made to contact an extraction residue which has been already subjected to extraction treatment and have the lowest protein concentration can be exemplified.

For the defatted soybeans described above, generally available low-denatured defatted soybeans defatted with a solvents such as hexane are preferably used, and among them, defatted soybeans having an NSI (nitrogen solubility index) of 60 or more, particularly 80 or more are used.

As for the above washing treatment by acidic water, an acid-washing treatment of washing low-denatured defatted soybeans with water having a pH at which whey components having soybean albumin as main component are eluted, while protein components having soybean globulin as main component are not eluted (acid-washing solution) can be exemplified.

A treatment of washing low-denatured defatted soybeans with an aqueous medium having a pH of 3.0 to 5.0, preferably 3. 5 to 4.5 as an acid-washing solution to remove whey components is used. The acid-washed soybean slurry obtained by the above acid-washing treatment can be used more preferably as a soybean raw material. Acids used in the above pH adjustment are not specifically limited, and examples include inorganic acids such as phosphoric acid, hydrochloric acid and sulfuric acid and organic acids such as citric acid, malic acid and lactic acid. Those acids may be used alone or in mixture of two or more types. Addition of an emulsifier to the acid-washing solution improves the fluidity of the slurry to facilitate separation between soluble components (whey) and insoluble components (acid-washed soybean slurry). The type of emulsifier is not specifically limited, and glycerin fatty acid ester having an HLB of 2 to 7 may preferably be exemplified, and its concentration is preferably 0.001 to 0.1% by weight based on the low-denatured defatted soybeans.

The method of acid washing described above is not specifically limited. Examples include a method in which soybeans are immersed in an acid-washing solution and stirred, and then a solid-liquid separation is carried out; a method in which acid-washing solution is made to flow down; and a multistage washing method (counter-current washing method) in which defatted soybeans and acid-washing solution are moved mutually in the opposite directions to contact each other, and solid-liquid separation is carried out. By this washing-treatment, when the amount of crude protein per solid content of acid-washed soy bean slurry increases, the content of crude protein as isolated-soy protein can be increased. Therefore, the amount of crude protein per solid content of acid-washed soybean slurry by this washing-treatment is preferably 65% or more, more preferably 70% or more. To increase the content of crude protein per solid content of acid-washed soybean slurry by the washing-treatment, the counter-current washing method is preferable, as soybeans can be washed with a less amount of washing solution, and concentration efficiency of protein is improved. It is more preferable to wash 2 or 3 times by the counter-current washing method. A solid-liquid separation apparatus separating soluble components and insoluble components is not specifically limited, and a well-known separation apparatus, e.g. a centrifuge, filter press or screw press may be used. A preferred example of washing temperature is 10 to 60°C which is a range of temperature at which protein is not denatured, more preferably 20 to 50°C, most preferably 40 to 50°C. A preferred washing time is 5 to 60 minutes, more preferably 10 to 30 minutes. Washing under these conditions can be carried out one or several times. Sugars, salts, pigments and the like solubilized together with whey protein can be also separated and removed by the above acid-washing treatment.

The method for producing isolated-soy protein of the present invention is characterized mainly by that an acid-washed soybean slurry obtained by washing defatted soybeans with an aqueous medium having a pH of 3.5 to 5.0 to remove whey components is used, and that a counter-current extraction method is carried out in the protein extraction step of extracting protein in the acid-washed soybean slurry into an aqueous medium in a neutral to alkaline region. In other words, it is characterized by that no acid-precipitation step is carried out, and that a counter-current extraction method is carried out in the protein extraction step of extracting protein in a soybean raw material into an aqueous medium in a neutral to alkaline region. In the protein extraction step, for extracting protein in a soybean raw material such as acid-washed soybean slurry obtained by the acid washing into an aqueous medium in a neutral to alkaline region, the protein can be separated from bean-curd refuse components being insoluble components by adding an aqueous medium to the soybean raw material, adjusting the pH to a neutral to alkali region to solubilize the protein. Otherwise, it can be separated by contacting the soybean raw material with an aqueous medium with the use of an aqueous medium having a pH in a neutral to alkaline region, and the like. In any case, the present invention is characterized by carrying out the extraction by a counter-current extraction method. Merely carrying out extraction several times with an aqueous medium in a neutral to alkaline region in the protein extraction step is not preferable as the concentration of protein in an extract solution cannot be increased, and the subsequent sterilization and drying step can not be performed efficiently. In contrast, when the extraction in the protein extraction step is carried out by the counter-current extraction method, the concentration of protein in the extract solution can be increased. Therefore, the extract solution can be directly sterilized and dried without a concentration step by acid-precipitation treatment to obtain very efficiently isolated-soy protein having excellent quality such as heat gelation properties.

In the counter-current extraction, the pH of the aqueous medium is preferably 6.5 to 8.0, more preferably 7.0 to 8.0, when extracting protein in the soybean raw material into the aqueous medium in a neutral to alkaline region. In this case, alkali metals such as sodium hydroxide or potassium hydroxide, or hydroxides, carbonates or bicarbonates of alkali earth metal can be used for adjustment of pH. The extraction temperature is preferably 10 to 70°C, more preferably 40 to 65°C, most preferably 45 to 65°C. If the extraction temperature is too high, soy protein is thermally denatured, and if the extraction temperature is too low, the viscosity increases, resulting in degradation in separability between the extract solution and the extraction residue. Furthermore, if the temperature is too low, the extraction rate of protein becomes low. In particular, if growth of microorganisms during extraction causes a problem, the growth can be preferably inhibited by extraction at 50°C or higher. The extraction time depends on the extraction scale, stirring conditions and the like, but generally it is preferably 10 to 120 minutes, more preferably 20 to 40 minutes. For the aqueous medium used in the extraction of soy protein is not specifically limited as long as it is a water-basedmedium capable of efficiently extracting protein in the soybean raw material. Specific examples of the aqueous medium include water, a liquid prepared by adding alcohol to water (water-containing alcohol) and a liquid prepared by adding salts to water, and water is especially preferable. For the amount of the aqueous medium used, it is preferable that the counter-current extraction is carried out by using the aqueous medium in an amount equal to or less than 7 times the amount of soybean raw material in terms of the raw material defatted soybean (per solid weight). In the case of acid-washed soybean slurry, for example, it is preferable that the counter-current extraction is carried out by using water in an amount equal to 2 to 6 times by weight, more preferably 3 to 4 times by weight of the amount of solid components of the slurry. The amount of aqueous medium used in the counter-current extraction is not the amount of liquid during the initial extraction but the total amount of liquid during the steady extraction.

The number of times of extraction in the counter-current extraction method is not specifically limited as long as the extraction is carried out 2 times or more, but the extraction is carried out preferably 2 or 3 times, more preferably 3 times when the soybean raw material is the acid-washed soybean slurry. By the three-stage counter-current extraction method in which extraction is carried out 3 times, the amount of protein remaining in the bean-curd refuse can be reduced, and thus the yield of protein can be improved. Furthermore, in the counter-current extraction, a pH gradient counter-current extraction method, a continuous counter-current extraction method, or a pH gradient continuous counter-current extraction method may be used. The pH gradient counter-current extraction method herein refers to a multistage extraction method in which the aqueous medium is made to contact with the soybean raw material with pH of the aqueous medium being increased or decreased sequentially as it moves in the above-described counter-current extraction step. Examples of the three-stage counter-current extraction step include a three-stage extraction step in which pH is increased (decreased) in the second extraction stage relative to the first extraction stage, and pH is increased (decreased) in the third extraction stage relative to the second extraction stage. The above continuous counter-current extraction method refers to an extraction method in which multistage extraction steps are continuously carried out in the above described counter-current extraction method. The above pH gradient continuous counter-current extraction method refers to an extraction method in which multistage extraction steps are continuously carried out in the above described pH gradient counter-current extraction step. These counter-current extraction steps enable the yield to be improved at a low cost.

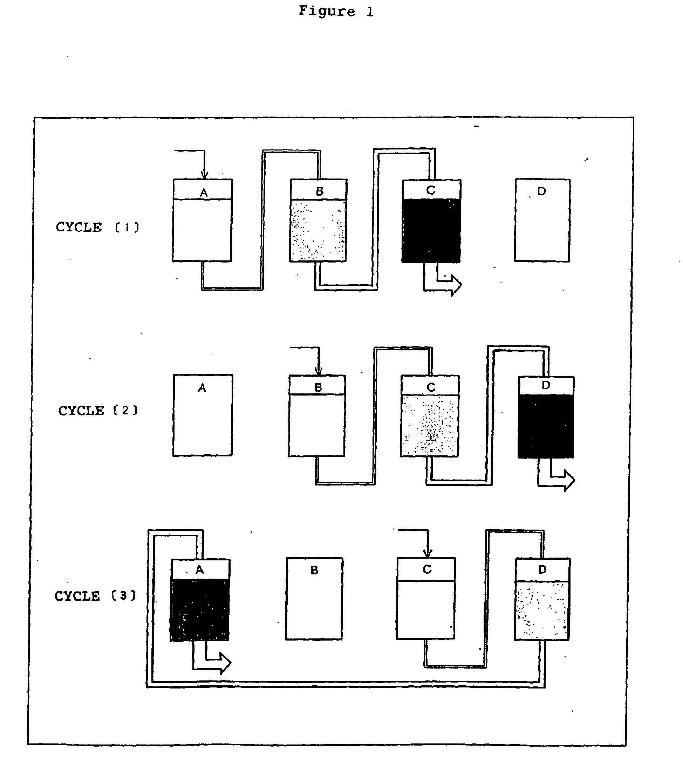

One embodiment of the counter-current extraction step of the present invention will now be described using a continuous three-stage counter-current extraction step as an example. Figure 1 is a conceptual view showing a three-stage counter-current extraction system in which an extraction residue containing mainly a soybean raw material and bean-curd refuse is not moved, but only an aqueous medium (extract solution) is moved, and made to contact the soybean raw material (extraction residue) sequentially. As shown in Figure 1, four extractors, A to D, are coupled in fluid communication with one another in the three-stage counter-current extraction system. Although it is not shown in the figure, each extractor comprises a solid-liquid separation mechanism, a stirring mechanism, a pH adjustment mechanism and the like. The gray scale of fillers in each extract solution represents a quantity of extractable protein for the sake of convenience, and the width of each line represents a solid content contained in the extract, for convenience.

In a cycle [1] wherein counter-current extraction is in steady conditions, a new aqueous medium is introduced into a second extraction residue in the extractor A, a first extract solution from the extractor A is transferred to a first extraction residue in the extractor B, a second extract solution from the extractor B is transferred to a new soybean raw material in the extractor C, and protein is extracted under stirring, respectively. After elapse of a predetermined extraction time period, solid-liquid separation is carried out in extractors A to C, respectively, the first extract solution is delivered from the extractor A to the extractor B, the second extract solution is delivered from the extractor B to the extractor C, and a protein extract solution (third extract solution) is collected from the extractor C. In the meantime, in the extractor D, a third extraction residue after completion of extraction is discharged, and a new soybean raw material is supplied. In the next cycle [2], the line is changed, a new aqueous medium is introduced into the second extraction residue in the extractor B, the first extract solution from the extractor B is transferred to the first extraction residue in the extractor C, the second extract solution from the extractor C is transferred to the new soybean raw material in the extractor D, and protein is extracted under stirring, respectively. After elapse of a predetermined timeperiod, solid-liquid separation is carried out in extractors B to D, respectively, the first extract solution is delivered from the extractor B to the extractor C, the second extract solution is delivered from the extractor C to the extractor D, and the protein extract solution (third extract solution) is collected from the extractor D. In the meantime, in the extractor A, a third extraction residue after completion of extraction is discharged, and a new soybean raw material is supplied.

Continuous counter-current extraction is carried out by repetition of these cycles and normally, the new soybean raw material having the highest protein concentration contacts the second extract solution having the highest solid concentration, while the newly introduced aqueous medium contacts the second extraction residue already subjected to extraction processing twice and having a low protein concentration. Thus, the extraction is carried out with a difference in concentration between the extract solution and the extracted material being kept constant all the time, thus making it possible to carry out the extraction efficiently at each extraction stage. Moreover, as a pH gradient is given in each extractor according to the extraction stage by the pH adjustment mechanism provided in each extractor, a pH gradient continuous counter-current extraction can be also carried out.

In the present invention, 8 to 18% by weight of a solid content of a soy protein extract solution is obtained by extracting protein with the counter-extraction step during the protein extraction step. However, it is preferable that 10 to 14% by weight of a solid content of a soy protein extract solution by appropriately selecting extraction conditions such as extraction pH, extraction temperature, extraction time, the amount of extract solution and the number of times of extractions. If the solid content is greater than 18% by weight, the viscosity of the protein solution will significantly increase, and thus the workability during subsequent sterilization and drying may be deteriorated. However, if isolated-soy protein obtained as a final product may be a hydrolyzed protein product, soy protein can be hydrolyzed using a catabolic enzyme such as protease to inhibit an increase in viscosity of the extract solution, and therefore the protein concentration can be increased. A solid content of 8% by weight or more is preferable because energy required for drying the protein extract solution into a powder form may be reduced.

A counter-current extraction apparatus that can be used in the counter-current extraction step described above, including commercially available counter-current extraction apparatuses, is not specifically limited. Examples thereof include a simulate moving bed counter-current extraction apparatus (Japanese Laid-Open Patent Application No. 5-207900) and a continuous counter-current extraction apparatus comprised of a screw conveyor extractor making a raw material and a liquid cross each other continuously by a special screw. Further, an apparatus that is used for separation of an extract solution having solubilized protein components and bean-curd refuse being insoluble components is not specifically limited, and a well-knownseparationapparatus, e.g. a centrifuge, filterpress or screw press may be used.

The soy protein extract solution obtained by the above-mentioned counter-current extraction method can be separated into water and protein after sterilization in the isolation step, and then dried. According to the method for producing isolated-soy protein of the present invention, particularly, the soy protein extract solution obtained by the counter-current extraction method can be provided directly for the sterilization and drying step. Therefore, it is possible to produce very efficiently sterilized and dried isolated-soy protein. The sterilization apparatus used in the sterilization and drying step is not specifically limited as long as it is a normal sterilization apparatus, and preferred examples of the apparatus include a steam injection type continuous direct heating sterilization apparatus. For sterilization conditions, preferred examples include heat sterilization for 3 seconds to 3 minutes at 100 to 160°C, preferably at 105 to 145°C. The drying step is not specifically limited as long as it is a conventionally known drying step, and preferred examples include freeze-drying, spray drying and vacuum drying causing less denaturation of protein. Prior to sterilization and drying, various kinds of blended components such as emulsifying components, stabilizing components, nutrient components and sweet components may be added.

The isolated-soy protein of the present invention is not specifically limited as long as it is an isolated-soy protein which is produced by sterilizing and drying a soy protein extract solution obtained by the above steps for producing isolated-soy protein by the counter-current extraction step. Specific examples include powdered and granulated isolated-soy protein. Preferred examples include powdered isolated-soy protein spray-dried after heat sterilization, and powdered isolated-soy protein obtained by grinding a freeze-dried product after heat sterilization. The isolated-soy protein is obtained without an acid-precipitation treatment, and thus it has reduced denaturation of protein and has excellent heat gelation properties, being very tasty without bitterness and astringency characteristic of soy protein. Preferred isolated-soy protein of the present invention may be powdered isolated-soy protein having a jelly strength of 150 g·cm or greater. In the present invention, the jelly strength (g·cm) refers to a measurement value of Leonar (Yamaden Co., Ltd.), when a 16.6% paste prepared by adding a 2% saline solution in an amount equivalent to five times the amount of the powdered soy protein to a sample of powdered soy protein is filled in a 35 mm folded-diameter casing, the gel prepared by heating at 80° for 30 minutes is cut to a thickness of 2 cm, and a 5 mm-diameter ball is used for a plunger.

The present invention also covers foods or food materials containing isolated-soy proteins such as powdered isolated-soy protein obtained by the present invention described above. The foods or food materials may include various kinds of drinks such as yogurt, yogurt drink, juice, milk, soybean milk, alcohol, coffee, tea, green tea, oolong tea and sport drink; breads/confectionaries such as pudding, cookie, bread, cake, jelly and baked confectioneries such as rice crackers, Japanese-style confectionaries such as sweet jelly of beans, frozen dessert, chewing gum; noodles such as Japanese wheat noodle and buckwheat noodle; fish paste products such as boiled fish paste, ham and fish sausage; seasonings such as miso, soy sauce, dressing, mayonnaise and sweeteners; dairy products such as cheese and butter; and various kinds of daily dishes such as bean curd (tofu), paste made from devil's tongue root (konnyaku), fried dumplings, croquettes and salads. As the isolated-soy protein in form of powder or like of the present invention has neither bitterness nor astringency characteristic of soy protein, it possible to retain the original tastes of food in various kinds of foods and food materials, and to improve a gelation strength, to improve a nutritive value by adding high-quality vegetable protein, and so on.

### (Examples)

The present invention will be described more specifically in the following, but the technical scope of the present invention is not limited to these examples. All the symbols "%" in the Examples represent % by weight.

### Example 1-1 (preparation of acid-washed soy slurry <1>)

2 kg of low-denatured defatted soybean flake having a NSI of 90 was gradually added to 12 kg of warm water at 45°C having 0.6 g of fatty acid monoglyceride ("Sun Soft O-30", Taiyo Chemical Co., Ltd.) dispersed therein as an emulsifier. The resultant mixture was gently stirred and washed for 10 minutes while adjusting it to pH 4.2 with hydrochloric acid, and the eluted-whey components were separated by a centrifuge and removed. Thus, 4 kg of acid-washed soybean slurry <1> having a water content of 63% and crude protein content of 66% per solid content was obtained. The slurry was divided into 1 kg-portions and subjected to a three-stage counter-current extraction. Example 1-2 (preparation of acid-washed soy slurry <2>)

For increasing the whey removal rate, two-stage counter-current extraction for whey washing was carried out. 12 kg of warm water at 45°C was added to 4 kg of the acid-washed slurry prepared in Example 1-1 . The resultant mixture was gently stirred and washed for 10 minutes, and the eluted-whey components were separated by a centrifuge to obtain 12 kg of whey. 0.6 g of fatty acid monoglyceride ("Sun Soft O-30", Taiyo Chemical Co., Ltd.) was dispersed in the whey as an emulsifier, and 2 kg of low-denatured defatted soybean flake having a NSI of 90 was gradually added to the dispersions. The resultant mixture was gently stirred and washed for 10 minutes while adjusting to pH 4.2 with hydrochloric acid. The eluted whey components were separated by a centrifuge and removed to obtain 4 kg of acid-washed slurry. Next, 12 kg of warm water at 45°C was added to the slurry. The resultant mixture was gently stirred and washed for 10 minutes, the eluted-whey components were then separated by a centrifuge to remove whey. Thus, 4 kg of two-stage counter-current-acid-washed soybean slurry <2> with 63% water content and 72% crude protein content per solid content was obtained. The slurry was divided into 1 kg-portions and subjected to a three-stage counter-current extraction.

### Example 2 (production of isolated-soy protein)

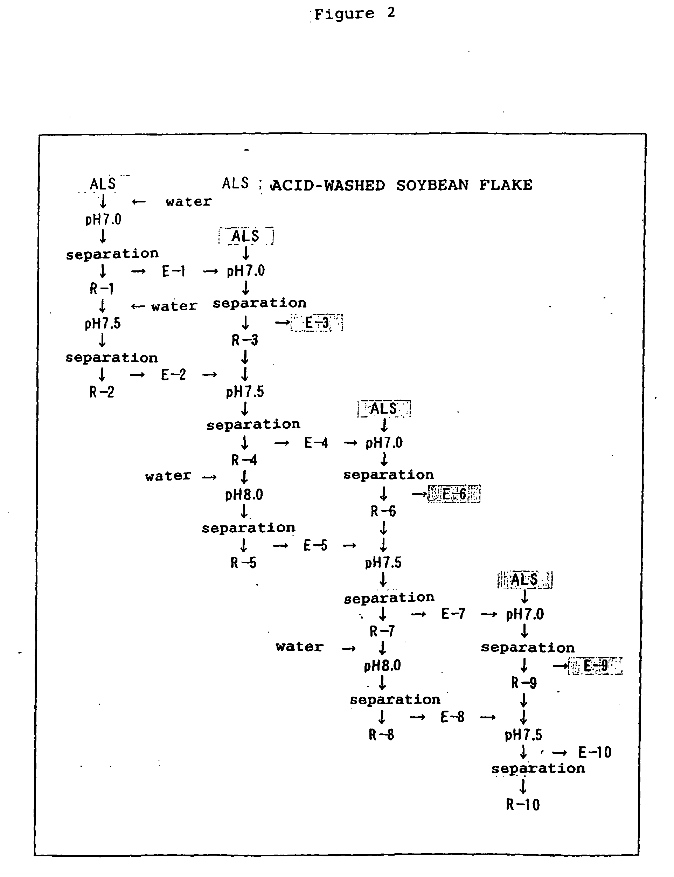

The outline of production of the isolated-soy protein by a pH gradient three-stage counter-current extraction using acid-washed soybean slurry as a soybean raw material is shown in Figure 2. Counter flow extractions were all carried out at 20°C, solid-liquid separation was carried out by centrifugal separation for 10 minutes at 1500 G, and pH of the extract solution was adjusted using a 20% sodium hydroxide solution.

Isolated soy protein was produced by pH gradient three-stage counter-current extraction with acid-washed soybean slurries of Examples 1-1 and 1-2. First, 2 kg of water was added to 1 kg of acid-washed soybean slurry <1> of Example 1-1, the resultant mixture was adjusted to pH 7.0, stirred for 30 minutes, and subjected to centrifugal separation. Thus, extraction residue R-1 and 2.0 kg of extract solution E-1 (solid content: 8.0%) were obtained. Next, 2 kg of water was added to the extraction residue R-1, the resultant mixture was adjusted to pH 7.5, stirred for 15 minutes, and subjected to centrifugal separation. Thus, extraction residue R-2 and 2.0 kg of extract solution E-2 (solid content: 2.5%) were obtained.

Then, 2 kg of extract solution E-1 was added to 1 kg of the acid-washed soybean slurry <1>. The resultant mixture was adjusted to pH 7.0, stirred for 30 minutes, and subjected to centrifugal separation. Thus, extraction residue R-3 and 2.0 kg of extract solution E-3 (solid content: 13.5%) were obtained. Next, 2 kg of extract solution E-2 was added to the extraction residue R-3. The resultant mixture was adjusted to pH 7.5, stirred for 30 minutes, and subjected to centrifugal separation. Thus, extraction residue R-4 and 2.2 kg of extract solution E-4 (solid content: 6.6%) were obtained. Further, 1.5 kg of water was added to the extraction residue R-4, the resultant mixture was adjusted to pH 8.0, stirred for 15 minutes, and subjected to centrifugal separation. Thus, extraction residue R-5 and 1.6 kg of extract solution E-5 (solid content: 2.0%) were obtained.

Moreover, 2.2 kg of extract solution E-4 was added to 1 kg of the acid-washed soybean slurry <1>, the resultant mixture was adjusted to pH 7.0, stirred for 30 minutes, and subjected to centrifugal separation. Thus, extraction residue R-6 and 2.2 kg of extract solution E-6 (solid content: 12.0%) were obtained. Next, 1.6 kg of extract solution E-5 was added to the extraction residue R-6, the resultant mixture was adjusted to pH 7.5, stirred for 30 minutes, and subjected to centrifugal separation. Thus, extraction residue R-7 and 1.7 kg of extract solution E-7 (solid content: 6.0%) were obtained. Further, 1.5 kg of water was added to the extraction residue R-7 , the resultant mixture was adjusted to pH 8.0, stirred for 15 minutes, and subjected to centrifugal separation. Thus, extraction residue R-8 and 1.6 kg of extract solution E-8 (solid content: 2.0%) were obtained.

Furthermore, 1.7 kg of extract solution E-7 was added to 1 kg of the acid-washed soybean slurry <1>, the resultant mixture was adjusted to pH 7.0, stirred for 30 minutes, and subjected to centrifugal separation. Thus, extraction residue R-9 and 2.0 kg of extract solution E-9 (solid content: 12.5%) were obtained. Next, 1.6 kg of extract solution E-8 was added to the extraction residue R-9, the resultant mixture was adjusted to pH 7.5, stirred for 15 minutes, and subjected to centrifugal separation to obtain. Thus, extraction residue R-10 and 1.7 kg of extract solution E-10 (solid content: 5.0%) were obtained.

Among the extracts obtained as described above, extract solutions E-3, E-6 and E-9 each having a solid content of 10% or more were mixed, heat-sterilized at 140°C for 10 seconds, and spray-dried. Thus, 825 g of powdered isolated-soy protein <1> having a water content of 5% was obtained. Similarly, a three-stage counter-current extraction was carried out for the acid-washed soybean slurry <2> of Example 1-2. The resultant extract solution was spray-dried, and 778 g of powdered isolated-soy protein <2> was obtained. The content of crude protein per solid content of the obtained powdered isolated-soy protein was 86.7% when using acid-washed soybean slurry <1> of Example 1-1, and 91.2% when using acid-washed soybean slurry <2> of Example 1-2. In the case of Example 1-2, the content of protein was higher than that of isolated-soy protein by acid-precipitation treatment. When extraction was carried out at 50°C instead of 20°C in the extraction step of protein, the result was similar to when the extraction was carried out at 20°C.

### Comparative Example 1 (production of isolated-soy protein with acid-precipitation treatment)

Warm water at 40°C was added to 2 kg of low-denatured defatted soybean flake (NSI 90) in an amount equal to 12 times the low-denatured defatted soybean flake, and the resultant mixture was adjusted to pH 7.0 with a hydroxide solution. The soybean dispersions were stirred at 5000 rpm for 1 hour using Homo Mixer (Tokushu Kika Kogyo Co., Ltd.) to extract protein, and bean-curd refuse components were removed by a centrifuge (1500G, 10 minutes). Thus, defatted soybean milk was obtained. Next, hydrochloric acid was added to the defatted soybean milk to adjust the pH to 4.5, a protein curd was precipitated and collected by the centrifuge. Water was added to the protein curd, and the resultant mixture was stirred to prepare curd slurry. Then, the curd slurry was neutralized to pH 7.0 with a sodium hydroxide solution. The neutralized solution was immediately heat-sterilized (140°C, 10 seconds), and spray-dried. Thus, 800 g of powdered isolated-soy protein having a water content of 5% was obtained. The protein content per solid content of the obtained powdered isolated soybean protein with acid-precipitation treatment was 90.5%.

The results of the jelly strength of gel and taste evaluation of the powdered-soy protein <1> and the powdered-soy protein <2> of Example 2 prepared using acid-washed slurries of Examples 1-1 and 1-2 as soybean raw materials, and of the powdered isolated-soy protein prepared in Comparative Example 1, are shown in Table 1. The gel was prepared by filling a 35 mm-folded diameter casing with a 16.6% paste prepared by adding to the powdered-soy protein a 2% saline solution in an amount equivalent to 5 times the amount of the powdered-soy protein, and heating the paste at 80°C for 30 minutes. The jelly strength (g·cm) of the sample gel was determined as a product of the value of a breaking force (g) and the value of a breaking deformation (cm), measured with a jelly strength measuring apparatus ("Leonar", Yamaden Co., Ltd.) by cutting the prepared gel to a thickness of 2 cm and using a 5 mm-diameter ball for a plunger. For the taste evaluation, water was added to the powdered isolated-soy protein to prepare a 5% solution, and the sensory evaluations was made with a five-point evaluation method (5 points: good, 4 points: slightly good, 3 points: moderate, 2 points: slightly bad, 1 point: bad) by 10 skilled professional panelists, and an average point was determined as the result of taste evaluation. As apparent from Table 1, it was found that the isolated-soy protein of the present invention had excellent gelation properties and was tasty compared to isolated-soy protein with acid-precipitation treatment.

**(Table 1)**

| | Jelly strength (g.cm) | Taste |
|---|---|---|
| Isolated soy protein <1> | 180 | 4.2 |
| Isolated soy protein <2> | 220 | 4.2 |
| Comparative Example 1 | 100 | 2.6 |

### Example 4 (jelly strength and taste evaluation of isolated-soy protein)

Then, the jelly strength when the concentration of dissolved isolated-soy protein is increased was examined in the same manner as in Example 3.

The results of jelly strength of gel and taste evaluation of the powdered-soy protein <2> (protein content per solid component: 91.2%) of Example 2 prepared using acid-washed slurry <2> of Example 1-2 as a soybean raw material, and of the powdered isolated-soy protein prepared in Comparative Example 1 are shown in Table 2. The gel was prepared by filling a 35 mm-folded diameter casing with a 18% paste prepared by adding to powdered-soy protein a 2% saline solution in an amount equivalent to 4.5 times the amount of the powdered-soy protein, and heating the paste at 80°C for 30 minutes. The jelly strength (g·cm) of the sample gel was determined as a product of the value of a breaking force (g) and the value of a breaking deformation (cm), measured with a jelly strength measuring apparatus ("Leonar", Yamaden Co., Ltd.) by cutting the prepared gel to a thickness of 2 cm and using a 5 mm-diameter ball for a plunger. For the taste evaluation, water was added to powdered isolated-soy protein to prepare a 5% solution, and the sensory evaluation was made with a five-point evaluation method (5 points: good, 4 points: slightly good, 3 points: moderate, 2 points: slightly bad, 1 point: bad) by 10 skilled professional panelists, and an average point was determined as the result of taste evaluation. As apparent from Table 2, it was found that the isolated-soy protein of the present invention had excellent gelation properties and was tasty.

**(Table 2)**

| | Jelly strength (g.cm) | Taste |
|---|---|---|
| Isolated soy protein <2> | 274 | 4.5 |
| Comparative Example 1 | 179 | 2.8 |

### Industrial Applicability

The present invention can provide an isolated-soy protein can be produced without an acid-precipitation treatment, and a tasty soy protein having excellent gelation properties efficiently. In addition, the present invention can also provide a production method for reducing the amount of water used during production of soy protein and lessening burden on the environment owing to the reduction of discharged water.

## Claims

1. A method for producing an isolated-soy protein without acid-precipitation step, comprising the following steps: an acid-washing step of washing defatted soybeans having an NSI (nitrogen solubility index) of 60 or more with an aqueous medium in a region of pH 3.0 to 5.0 to extract and remove whey components; an extraction step of extracting protein from acid-washed soybean slurry obtained in the acid-washing step with an aqueous medium in a neutral to alkaline region by a counter-current extraction method and then removing extraction residue to obtain a soy protein extract solution with 8 to 18% by weight of a solid content; and to provide the extract solution obtained in the extraction step directly for a drying step.

2. The method for producing an isolated-soy protein according to claim 1, wherein the extract solution obtained in the extraction step is provided directly for a sterilization and drying step.

3. The method for producing an isolated-soy protein according to claim 1 or 2, wherein the counter-current extraction method is a three-stage counter-current extraction method.

4. The method for producing an isolated-soy protein according to any one of claims 1 to 3, wherein the counter-current extraction method is a pH gradient counter-current extraction method.

5. The method for producing an isolated-soy protein according to any of claims 1 to 4, wherein the protein is extracted with an aqueous medium in an amount equal to or less than seven times the amount of soybean raw material in terms of raw material defatted soybeans, in the extraction step.

6. The method for producing an isolated-soy protein according to any of claims 1 to 5, wherein the extraction is carried out at an extraction temperature of 40 to 65°C, in the extraction step.

7. The method for producing an isolated-soy protein according to any of claims 1 to 6, wherein the extraction is carried out so that the soy protein content in the extract solution is 10% by weight or more, in the extraction step.

8. The method for producing an isolated-soy protein according to any of claims 1 to 7, wherein the neutral to alkaline region is a region of pH 6.5 to 8.5.

9. The method for producing an isolated-soy protein according to any of claims 1 to 8, wherein the defatted soybeans are washed by a multistage washing method of two or three stages, in the acid-washing step.

10. The method for producing an isolated-soy protein according to any of claims 1 to 9, wherein the defatted soybeans are washed so that the crude protein content in the acid-washed soybean slurry solid material is 65% by weight or more, preferably 70% by weight or more, in the acid-washing step.

11. The method for producing an isolated-soy protein according to any of claims 1 to 10, wherein the defatted soybeans are washed with an aqueous medium containing an emulsifier, in the acid-washing step.

12. A method for producing a food or food material comprising the method for producing an isolated-soy protein according to any one of claims 1 to 11.

## Patentansprüche

1. Verfahren zur Herstellung eines isolierten Sojaproteins ohne Säurefällungsstufe, welches die folgenden Stufen umfasst: eine Säurewäschestufe, bei der entfettete Sojabohnen mit einem NSI (Stickstofflöslichkeitsindex) von 60 oder mehr mit einem wässrigen Medium im pH-Bereich von 3,0 bis 5,0 gewaschen werden, um Molkekomponenten zu extrahieren und zu entfernen, eine Extraktionsstufe, bei der Protein aus der in der Säurewäschestufe erhaltenen mit Säure gewaschenen Sojabohnenaufschlämmung mit einem wässrigen Medium in einem neutralen bis alkalischen Bereich durch ein Gegenflussextrationsverfahren extrahiert wird und dann die Extraktionsreste entfernt werden, unter Erhalt einer Sojaproteinextraktlösung mit 8 bis 18 Gew.-% Trockengehalt, und unmittelbar Bereitstellen der in der Extraktionsstufe erhaltenen Extraktlösung für eine Trocknungsstufe.

2. Verfahren zur Herstellung eines isolierten Sojaproteins gemäß Anspruch 1, wobei die in der Extraktionsstufe erhaltene Extraktlösung unmittelbar für eine Sterilisierungs- und Trocknungsstufe bereitgestellt wird.

3. Verfahren zur Herstellung eines isolierten Sojaproteins gemäß Anspruch 1 oder 2, wobei das Gegenflussextraktionsverfahren ein dreistufiges Gegenflussextraktionsverfahren ist.

4. Verfahren zur Herstellung eines isolierten Sojaproteins gemäß einem der Ansprüche 1 bis 3, wobei das Gegenflussextraktionsverfahren ein pH-Gradienten-Gegenflussextraktionsverfahren ist.

5. Verfahren zur Herstellung eines isolierten Sojaproteins gemäß einem der Ansprüche 1 bis 4, wobei das Protein mit einer wässrigen Lösung in einer Menge von gleich oder weniger als die siebenfache Menge des Sojabohnenrohmaterials, bezogen auf das Rohmaterial der entfetteten Sojabohnen, in der Extraktionsstufe extrahiert wird.

6. Verfahren zur Herstellung eines isolierten Sojaproteins gemäß einem der Ansprüche 1 bis 5, wobei die Extraktion bei einer Extraktionstemperatur von 40 bis 75° C in der Extraktionsstufe durchgeführt wird.

7. Verfahren zur Herstellung eines isolierten Sojaproteins gemäß einem der Ansprüche 1 bis 6, wobei die Extraktion so durchgeführt wird, dass in der Extraktionsstufe der Sojaproteingehalt in der Extraktlösung 10 Gew.-% oder mehr ist.

8. Verfahren zur Herstellung eines isolierten Sojaproteins gemäß einem der Ansprüche 1 bis 7, wobei der neutrale bis alkalische Bereich ein pH-Bereich von 6,5 bis 8,5 ist.

9. Verfahren zur Herstellung eines isolierten Sojaproteins gemäß einem der Ansprüche 1 bis 8, wobei die entfetteten Sojabohnen mit einem mehrstufigen Waschverfahren mit zwei oder drei Stufen in der Säurewäschestufe gewaschen werden.

10. Verfahren zur Herstellung eines isolierten Sojaproteins gemäß einem der Ansprüche 1 bis 9, wobei die entfetteten Sojabohnen in der Säurewäschestufe so gewaschen werden, dass der Rohproteingehalt in dem Trockenmaterial der mit Säure gewaschenen Sojabohnenaufschlämmung 65 Gew.-% oder mehr ist, bevorzugt 70 Gew.-% oder mehr.

11. Verfahren zur Herstellung eines isolierten Sojaproteins gemäß einem der Ansprüche 1 bis 10, wobei die entfetteten Sojabohnen in der Säurewäschestufe mit einem einen Emulgator enthaltenden wässrigen Medium gewaschen werden.

12. Verfahren zur Herstellung eines Nahrungsmittels oder von Nahrung, welches das Verfahren zur Herstellung eines isolierten Sojaproteins gemäß einem der Ansprüche 1 bis 11 umfasst.

## Revendications

1. Procédé pour la production d'une protéine isolée du soja sans étape de précipitation à l'acide, comprenant les étapes suivantes : une étape de lavage à l'acide consistant à laver le soja dégraissé ayant un indice de solubilité de l'azote (ISA) de 60 ou plus avec un milieu aqueux dans une zone de pH allant de 3,0 à 5,0 afin d'extraire et d'éliminer les composants du lactosérum ; une étape d'extraction consistant à extraire les protéines de la pâte de soja lavée à l'acide obtenue lors de l'étape de lavage à l'acide avec un milieu aqueux dans une zone neutre à alcaline par un procédé d'extraction à contre-courant et ensuite à éliminer les résidus de l'extraction afin d'obtenir une solution d'extrait de protéine de soja présentant de 8 % à 18 % en poids de matières solides ; et opérer directement sur la solution d'extrait obtenue lors de l'étape d'extraction une étape de séchage.

2. Procédé pour la production d'une protéine isolée du soja selon la revendication 1, dans lequel la solution d'extrait obtenue lors de l'étape d'extraction est envoyée directement vers une étape de stérilisation et de séchage.

3. Procédé pour la production d'une protéine isolée du soja selon la revendication 1 ou 2, dans lequel le procédé d'extraction à contre-courant est un procédé d'extraction à contre-courant en trois étapes.

4. Procédé pour la production d'une protéine isolée du soja selon l'une quelconque des revendications 1 à 3, dans lequel le procédé d'extraction à contre-courant est un procédé d'extraction à contre-courant à gradient de pH.

5. Procédé pour la production d'une protéine isolée du soja selon l'une quelconque des revendications 1 à 4, dans lequel la protéine est extraite avec un milieu aqueux en une quantité équivalente ou inférieure à sept fois la quantité de matière brute de soja en termes de matière brute de soja dégraissé, lors de l'étape d'extraction.

6. Procédé pour la production d'une protéine isolée du soja selon l'une quelconque des revendications 1 à 5, dans lequel l'extraction est réalisée à une température d'extraction allant de 40 °C à 65 °C, lors de l'étape d'extraction.

7. Procédé pour la production d'une protéine isolée du soja selon l'une quelconque des revendications 1 à 6, dans lequel l'extraction est réalisée de sorte que la teneur en protéine de soja dans la solution d'extrait est de 10 % en poids ou plus, lors de l'étape d'extraction.

8. Procédé pour la production d'une protéine isolée du soja selon l'une quelconque des revendications 1 à 7, dans lequel la zone neutre à alcaline est une zone de pH allant de 6,5 à 8,5.

9. Procédé pour la production d'une protéine isolée du soja selon l'une quelconque des revendications 1 à 8, dans lequel le soja dégraissé est lavé par un procédé de lavage à plusieurs étapes ayant deux ou trois étapes, lors de l'étape de lavage à l'acide.

10. Procédé pour la production d'une protéine isolée du soja selon l'une quelconque des revendications 1 à 9, dans lequel le soja dégraissé est lavé de sorte que la teneur en protéine brute dans les matières solides de la pâte de soja lavé à l'acide est de 65 % en poids ou plus, de préférence de 70 % en poids ou plus, lors de l'étape de lavage à l'acide.

11. Procédé pour la production d'une protéine isolée du soja selon l'une quelconque des revendications 1 à 10, dans lequel le soja dégraissé est lavé avec un milieu aqueux contenant un émulsifiant, lors de l'étape de lavage à l'acide.

12. Procédé pour la production d'un aliment ou d'une substance alimentaire comprenant le procédé pour la production d'une protéine isolée du soja selon l'une quelconque des revendications 1 à 11.
